# EUROPÄISCHE PATENTANMELDUNG

(11) **EP 1 319 797 A1**
(43) Veröffentlichungstag der Anmeldung: **18.06.2003**
(21) Anmeldenummer: 02026043.6
(22) Anmeldetag: 22.11.2002
(51) Int. Cl.: E21B 10/12, B22F 7/06

(54) **Schneidring für Diskenrollen von Teil- und/oder Vollschnittmaschinen**

(30) Priorität: 15.12.2001 DE 10161825
(71) Anmelder: Duden, Sandra, 46244 Bottrop (DE)
(72) Erfinder: Duden, Sandra, 46244 Bottrop (DE)
(74) Vertreter: Lelgemann, Karl-Heinz, Dipl.-Ing.

(57) **Zusammenfassung**

Ein Schneidring (1) für Diskenrollen von Teil- und/oder Vollschnittmaschinen hat einen Basisring (2) aus Stahl od.dgl.

Um einen derartigen Schneidring mit hoher Standfestigkeit zu versehen und dennoch mit einem vergleichsweise geringen technisch-wirtschaftlichen Aufwand herstellbar zu gestalten, wird vorgeschlagen, daß der Schneidring einen geschlossenen Hartmetallring (4) aufweist, der an der Außenmantelfläche (3) des Basisrings (2) angeordnet ist.

## Beschreibung

Die Erfindung bezieht sich auf einen Schneidring für Diskenrollen von Teil- und/oder Vollschnittmaschinen mit einem Basisring aus Stahl od.dgl. Werkstoff.

Derartige Schneidringe kommen als Bestandteile von Diskenrollen im Bergbau sowie im Tunnel- und Stollenbau zum Einsatz und dienen dazu, das an der Ortsbrust anstehende Gestein zu zerstören bzw. zu zerkleinern. Es sind derartige Schneidringe bekannt, die insgesamt aus einem gehärteten Stahl bestehen. Aufgrund der bei der Gesteinszerstörung entstehenden hohen Abriebskräfte und des damit einhergehenden hohen Verschleißes weisen derartige stählerne Schneidringe keine langen Standzeiten auf.

Zur Verbesserung der Schneidwirkung des Schneidrings wurden in den Bereich der Außenumfangsfläche desselben Ausnehmungen zur Aufnahme von Hartmetallstiften ausgebildet, wobei in diese Ausnehmungen Hartmetallstifte eingelötet wurden. Derartige Schneidringe sind insoweit problematisch, als aufgrund der Wärmeentwicklung beim Schneidvorgang Temperaturen auftreten können, die dazu führen, daß das zwischen dem Hartmetall und dem gehärteten Stahl als Verbindungsmittel dienende Lot erweicht, woraufhin ein fester Verbund zwischen den Hartmetallstiften und dem Grundkörper des Schneidrings nicht mehr gewährleistet ist. Dies führt ebenfalls zu vergleichsweise kurzen Standzeiten. Darüber hinaus ergibt sich aufgrund des erforderlichen Verlötungsvorgangs ein erheblicher technisch-Konstruktiver Aufwand bei der Herstellung der zuletzt geschilderten Schneidringe.

Der Erfindung liegt die Aufgabe zugrunde, einen Schneidring für Diskenrollen von Teil- und/oder Vollschnittmaschinen zu schaffen, der einerseits höhere Standzeiten zuläßt und andererseits mit einem geringeren technisch-wirtschaftlichen Aufwand herstellbar ist.

Diese Aufgabe wird erfindungsgemäß dadurch gelöst, daß der Schneidring mit einem geschlossenen Hartmetallring versehen wird, der an der Außenmantelfläche des Basisrings angeordnet ist.

Dieser Hartmetallring besteht vorzugsweise aus einer Vielzahl von Hartmetallteilsegmenten, die an der Außenmantelfläche des Basisrings in Umfangsrichtung desselben nebeneinander angeordnet sind.

Zwischen benachbarten Hartmetallteilsegmenten des Hartmetallrings ist zweckmäßigerweise ein Spannungsausgleichsspalt ausgebildet. Hierdurch können Spannungen, die wegen der unterschiedlichen Wärmeausdehnungskoeffizienten des den Basisring bildenden stählernen Werkstoffs und des die Hartmetallteilsegmente bildenden Werkstoffs entstehen, ausgeglichen werden.

Die Hartmetallsegmente bestehen vorzugsweise aus einer Kobalt- und/oder einer Nickellegierung.

Der Basisring wird gemäß einer vorteilhaften Ausführungsform mit den Hartmetallteilsegmenten vergossen, wobei vorteilhaft die dem Basisring zugewandten Kontaktflächen der Hartmetallteilsegmente aufgerauht ausgestaltet sind, so daß beim Gießen des Basisrings ein inniger Verbund zwischen den Hartmetallteilsegmenten einerseits und dem Basisring andererseits herstellbar ist. Aufgrund der Aufrauhung ist die Kontaktfläche zwischen Basisring einerseits und Hartmetallteilsegmenten andererseits erheblich vergrößert, so daß am Übergangsbereich zwischen den Hartmetallteilsegmenten und dem Basisring vergleichsweise hohe Druckkräfte aufgenommen werden können.

Zur Aufrauhung der dem Basisring zugewandten Kontaktflächen der Hartmetallteilsegmente können diese Kontaktflächen vorteilhaft pyramidenförmige Vorsprünge aufweisen.

Gemäß einer weiteren Ausführungsform des erfindungsgemäßen Schneidrings kann dessen Basisring aus zumindest zwei Teilsegmenten bestehen, die radial innerhalb der Hartmetallteilsegmente zum Basisring zusammengelegt und miteinander verlötet sind.

In Weiterbildung des vorstehend geschilderten Schneidrings kann dessen Basisring mit den Hartmetallteilsegmenten verlötet sein.

Der erfindungsgemäße Schneidring ist in einem Verbundgußverfahren in unterschiedlichen Größen und Durchmessern mit einem vergleichsweise geringen technisch-wirtschaftlichem Aufwand herstellbar. Hierbei wird an in einem Kreis angeordnete Hartmetallteilsegmente der Basisring aus Stahl angegossen. Zur Ausgestaltung der Spannungsausgleichspalten werden die Hartmetallteilsegmente in Umfangsrichtung des Schneidrings mit einem geringen Abstand zueinander angeordnet, bevor der Basisring an sie angegossen wird. Die Kontaktflächen der Hartmetallteilsegmente, die dem zu gießenden Basisring zugewandt sind, werden aufgerauht.

Bei einem weiteren erfindungsgemäßen Verfahren zur Herstellung eines Schneidrings für Diskenrollen von Teil- und/oder Vollschnittmaschinen wird ein aus zumindest zwei Teilsegmenten bestehender Basisring radial innerhalb in einem Kreis angeordneter Hartmetallteilsegmente zusammengelegt und werden die zumindest zwei Teilsegmente des Basisrings miteinander verlötet. In Weiterbildung dieses Verfahrens kann der Basisring bzw. können dessen beide Teilsegmente mit den Hartmetallteilsegmenten verlötet werden.

Im folgenden wird die Erfindung anhand einer Ausführungsform unter Bezugnahme auf die Zeichnung näher erläutert.

### Es zeigen:

- Figur 1: eine Prinzipdarstellung einer Hälfte eines erfindungsgemäßen Schneidrings für Diskenrollen von Teil- und/oder Vollschnittmaschinen;
- Figur 2: eine Schnittdarstellung des in Figur 1 gezeigten erfindungsgemäßen Schneidrings; und
- Figur 3: den Ausschnitt A in Figur 2.

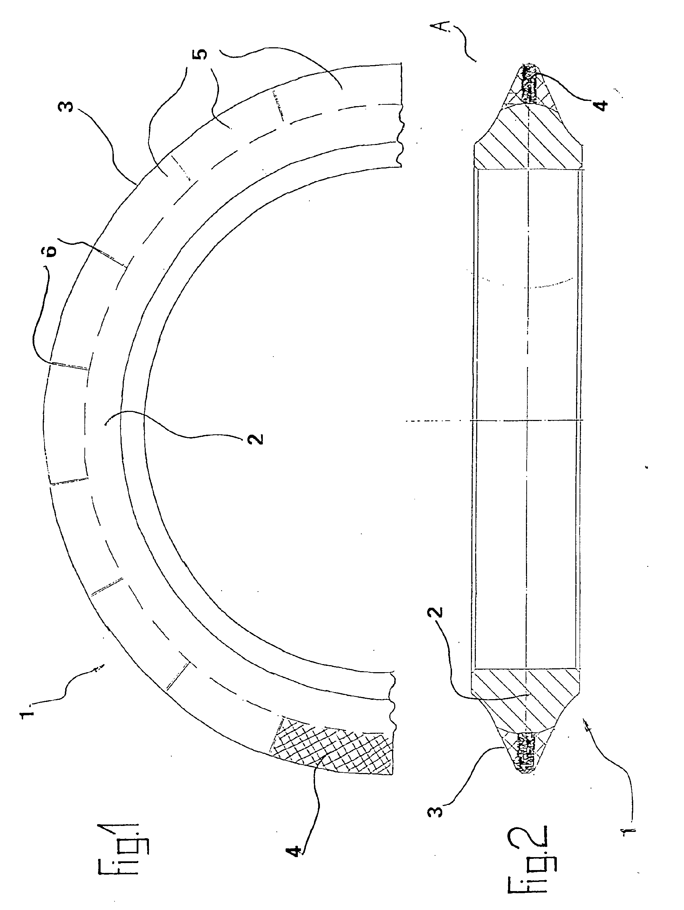

Ein in Figur 1 anhand einer Hälfte seiner selbst prinzipiell dargestellter erfindungsgemäßer Schneidring 1 ist dazu bestimmt, als Bestandteil einer ansonsten in den Figuren 1 bis 3 nicht dargestellten Diskenrolle von Teil- und/oder Vollschnittmaschinen zu fungieren. Hierbei bildet der Schneidring 1 das eigentlich schneidende Teil der Diskenrolle, mittels dem an einer Ortsbrust anstehendes Gestein zerstört wird.

Der Schneidring 1 hat einen Basisring 2, der aus Gußstahl gegossen ist.

Im Bereich seiner Außenmantelfläche 3 weist der Schneidring 1 einen in den Basisring 2 eingelassenen Hartmetallring 4 auf, der, wie insbesondere aus Figur 1 hervorgeht, aus einer Vielzahl in Umfangsrichtung des Schneidrings 1 nebeneinander angeordneter Hartmetallteilsegmente 5 besteht. Zwischen benachbarten Hartmetallteilsegmenten 5 ist jeweils ein Spannungsausgleichsspalt 6 vorgesehen, der dazu dient, den Ausgleich von thermischen Spannungen zu ermöglichen, die darauf zurückzuführen sind, daß beim Betrieb der Diskenrolle bzw. des Schneidrings 1 vergleichsweise hohe Temperaturen entstehen und daß der Werkstoff der Hartmetallteilsegmente 5 und der Gußstahl des Basisrings 2 unterschiedliche Wärmeausdehnungskoeffizienten aufweisen.

Der Basisring 2 ist an die kreisförmig angeordneten Hartmetallteilsegmente 5 angegossen. Die Hartmetallteilsegmente 5 bilden den quasi geschlossenen Hartmetallring 4, wobei durch den Gießvorgang ein inniger Verbund zwischen dem Basisring 2 einerseits und den Hartmetallteilsegmenten 5 andererseits vorliegt.

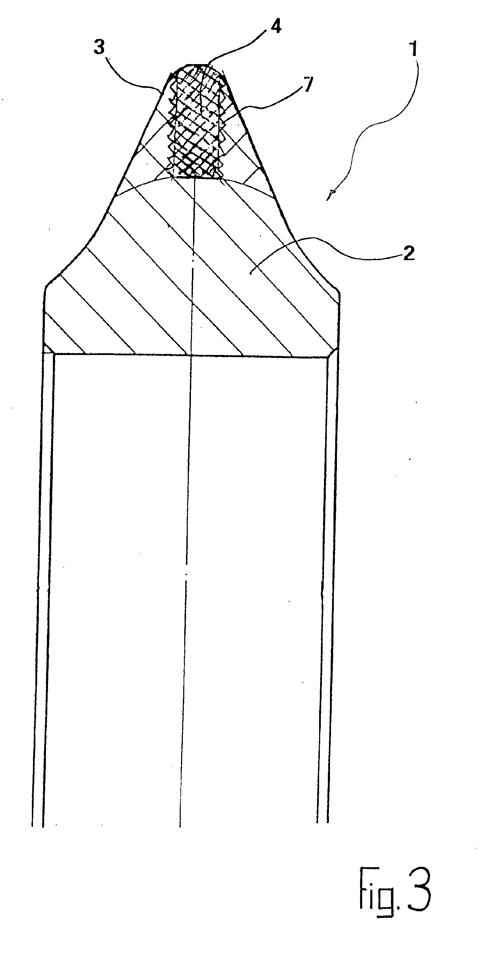

Zur Stärkung dieses innigen Verbundes ist, wie sich insbesondere aus Figur 3 ergibt, jedes Hartmetallteilsegment 5 an Kontaktflächen, an die der Basisring 2 angegossen wird, mit pyramidenförmigen Vorsprüngen 7 ausgebildet.

Der Schneidring 1 ist im Verbundgußverfahren in unterschiedlichen Größen und Durchmessern herstellbar.

Als Werkstoff für die Hartmetallteilsegmente 5 kommen Kobaltund/oder Nickellegierungen in Frage.

Durch die mittels der Vorsprünge 7 vergrößerten Oberflächen der Kontaktflächen zwischen den Hartmetallteilsegmenten 5 und dem an diese anzugießenden Basisring 2 kann der erfindungsgemäße Schneidring 1 hohe Druckkräfte aufnehmen, ohne daß Beschädigungen des Schneidrings 1 insbesondere am Übergang zwischen den Hartmetallteilsegmenten 5 und dem Basisring 2 auftreten.

Der Basisring 2 des Schneidrings kann aus zumindest zwei Teilsegmenten bestehen, wobei diese radial innerhalb der Hartmetallteilsegmente 5 zum Basisring 2 zusammengelegt und miteinander und mit den Hartmetallteilsegmenten 5 verlötet sind.

## Patentansprüche

1. Schneidring (1) für Diskenrollen von Teil- und/oder Vollschnittmaschinen, mit einem Basisring (2) aus Stahl od.dgl. Werkstoff, **gekennzeichnet durch** einen geschlossenen Hartmetallring (4), der an der Außenmantelfläche (3) des Basisrings (2) angeordnet ist.

2. Schneidring nach Anspruch 1, bei dem der Hartmetallring (4) aus einer Vielzahl von Hartmetallteilsegmenten (5) ausgebildet ist, die an der Außenmantelfläche (3) des Basisrings (2) in Umfangsrichtung desselben nebeneinander angeordnet sind.

3. Schneidring nach Anspruch 2, bei dem zwischen benachbarten Hartmetallteilsegmenten (5) des Hartmetallrings (4) ein Spannungsausgleichsspalt (6) ausgebildet ist.

4. Schneidring nach Anspruch 2 oder 3, dessen Hartmetallteilsegmente (5) aus einer Kolbalt- und/oder einer Nickellegierung bestehen.

5. Schneidring nach einem der Ansprüche 2 bis 4, dessen Basisring (2) mit den Hartmetallteilsegmenten (5) vergossen ist.

6. Schneidring nach Anspruch 5, bei dem die dem Basisring (2) zugewandten Kontaktflächen der Hartmetallteilsegmente (5) aufgerauht ausgestaltet sind, so daß beim Gießen des Basisrings (2) ein inniger Verbund zwischen den Hartmetallteilsegmenten (5) einerseits und dem Basisring (2) andererseits herstellbar ist.

7. Schneidring nach Anspruch 6, bei dem die dem Basisring (2) zugewandten Kontaktflächen pyramidenförmige Vorsprünge (7) aufweisen.

8. Schneidring nach einem der Ansprüche 1 bis 4, dessen Basisring (2) aus zumindest zwei Teilsegmenten besteht, die radial innerhalb der Hartmetallteilsegmente (5) zum Basisring (2) zusammengelegt und miteinander verlötet sind.

9. Schneidring nach Anspruch 8, dessen Basisring (2) mit den Hartmetallteilsegmenten (5) verlötet ist.

10. Verfahren zur Herstellung eines Schneidrings (1) für Diskenrollen von Teil- und/oder Vollschnittmaschinen, bei dem an in einem Kreis angeordnete Hartmetallteilsegmente (5) ein Basisring (2) aus Stahl angegossen wird.

11. Verfahren zur Herstellung eines Schneidrings (1) nach Anspruch 10, bei dem die Hartmetallteilsegmente (5) in Umfangsrichtung des Schneidrings (1) mit einem geringen Abstand (6) zueinander angeordnet werden.

12. Verfahren nach Anspruch 10 oder 11, bei dem die dem zu gießenden Basisring (2) zugewandten Kontaktflächen der Hartmetallteilsegmente (5) aufgerauht werden.

13. Verfahren zur Herstellung eines Schneidrings (1) für Diskenrollen von Teil- und/oder Vollschnittmaschinen, bei dem ein aus zumindest zwei Teilsegmenten bestehender Basisring (2) radial innerhalb in einem Kreis angeordneter Hartmetallteilsegmente (5) zusammengelegt wird und die zumindest zwei Teilsegmente des Basisrings (2) miteinander verlötet werden.

14. Verfahren nach Anspruch 13, bei dem der Basisring (2) mit den Hartmetallteilsegmenten (5) verlötet wird.
